# EUROPEAN PATENT APPLICATION

(11) **EP 2 765 039 A1**
(43) Date of publication of application: **13.08.2014**
(21) Application number: 14151042.0
(22) Date of filing: 14.01.2014
(51) Int. Cl.: B60S 3/06, B60S 3/00

(54) **Recycling of the chemical in a washing system for vehicles**

(30) Priority: 16.01.2013 IT FI20130012
(71) Applicant: Cenci, Carlo, 50013 Campi Bisenzio (FI) (IT); Tidda, Antonello, 50013 Campi Bisenzio (FI) (IT)
(72) Inventor: Cenci, Carlo, 50013 Campi Bisenzio (FI) (IT); Tidda, Antonello, 50013 Campi Bisenzio (FI) (IT)
(74) Representative: Fanfani, Stefano

(57) **Abstract**

The recycling for which a patent is sought, applicable to tunnel washing systems for vehicles, allows to collect the used chemical product, generally a basic chemical product, in order to reuse it for further vehicle washing.

## Description

### Technical field

The present invention relates to the field of the automatic washing systems for vehicles, non integral with the vehicle. More in particular, the invention relates to an automatic washing system for vehicles with recycling of the cleaning chemical product, preferably used at high concentration.

### Prior art

Automatic vehicles washing systems are known for a long time, normally comprising jets of water and surfactant combined with the action of rotating brushes.

The vehicle cleaning is consequently obtained as combined effect of the chemical action carried out by the used product and the mechanical dirt removal action carried out by the relative motion between brushes and vehicle.

The cleaning action of the brushes has some non-marginal disadvantages, such as the risk of leaving wearing trails on the vehicle paint and the need to provide for periodical replacements and/or maintenance. The power consumption and the wastewater drainage represent significant costs as well. First of all the vehicles are usually sprayed with emollients, generally obtained with aqueous solutions of appropriate products. In traditional systems the cleansing products do not usually exceed a mass concentration of 2,5% - 3%, so to limit both the product cost and the charges for wastewater drainage.

Said emollients cause dirtiness to break up, said action is usually strengthened through following vigorous water jets. In order to favor the cleaning action or to avoid spots consequent to final rinsing, water softeners or osmosis water systems are generally used, as described in the state of the art of WO 2007/071346 A2. Said application relates to an automatic washing system for vehicles, of the type without brushes, comprising at least one arc-form structure with nozzles spraying at least one cleansing agent.

In the systems provided with mechanical brushing, this one normally starts working only after the above described treatment with emollients. A similar procedure is described in the patent application WO 2012/159936 A1, related to a double-arc washing system for vehicles: the first arc allows to wash the vehicle through high pressure water jets only, while the second arc is equipped with brushes. In particular, said double arc system allows deciding whether to use the water jet washing only, or to activate the brushes too.

In known systems the used chemical products and the water, together with the dirt removed from the vehicle, are drained by conveying and treating them in proper tanks for sedimentation, oil separation and clarification. Eventually, in order to reduce the operating costs, water can be reused instead of being drained. For example, the patent application CN 202429177 U, related to a lay-by washing system without arcs, describes how water could be conveniently used again after its filtration.

The wastewater treatment system of a washing system for vehicles can be, for example, of the same type described in the application JP 2005074294 A: the proposed system allows to reuse the clarified water inside the washing system, once the wastewater has been separated from the dirt present on the vehicle and from the used cleansing agents.

Nevertheless, the surprising technical effects and the various benefits obtainable with the object of the present patent application will be evident to experts, not only for the advantages deriving from water recycling, but, better, for the possibility to replenish the emollient solution.

### Objects and brief description of the invention

The washing systems adopting the device object of the present patent application comprise a first part dedicated to the emollient treatment and a second part dedicated to brushing, rinsing and other possible finishing treatments such as drying, waxing and similar.

Compared to traditional washings, the new system allows to largely or even totally reuse the chemical product already used for the emollient treatment, by means of a series of treatment tanks and filters aimed to clarify it.

At the entry the system is provided with a concentrated chemical pre-washing phase, through one or more arcs (2) each of which having a plurality of spraying nozzles; said chemical pre-washing, being concentrated and vigorously and uniformly flooding the whole vehicle, normally already succeeds in removing all, or almost all, the existing dirt; only a final light brushing is thus enough, followed by the vehicle rinsing.

The high concentration of the emollient chemical product makes convenient the collection, treatment and following reuse of the wastewater utilized in the first washing phase. As a matter of fact, although the system object of the present patent application regularly works also with traditional concentrations of chemical products in the aqueous solution, particular advantages can be obtained in case of high concentration. For example, even a 4-5% concentration allows to obtain better results in cleaning the vehicle.

The recycling of the used product allows to reduce the number of the brushes with a consequent significant cost saving, equal to ca. 40% compared to a traditional system, in addition to a consistent saving of energy, used product, maintenance, water consumption, and wastewater quantity and pollution as well.

From what above stated, it can be inferred that it will be possible to have a remarkable saving related to:
1) the consumption of chemical product;
2) the consumption of water and energy;
3) less maintenance of the whole system;
4) the construction of the whole tunnel washing system;
5) less usage of the wastewater drainage system.

### Brief description of drawings

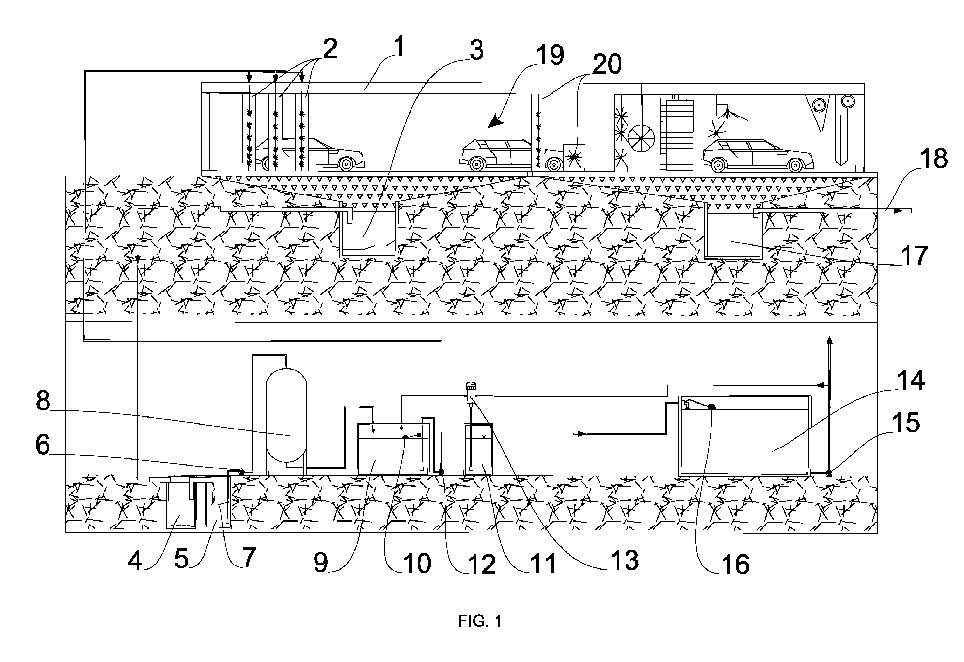

**Fig. 1** shows a view with some partial cross-sections so to better understand the invention. The Figure represents a tunnel washing system (1) which has some arcs (2) in its first section for the spraying of an aqueous solution of a concentrated chemical product onto the vehicles.

All the elements beneath the ground (1) of the washing system tunnel can be really in sunken rooms or they can be somewhere else, for instance on the ground close to the tunnel itself. The exhausted emollient product, falling on the ground inside a space (19) used to drip the emollient product, enters first a sedimentation tank (3), then a second tank (4) for further sedimentation and oil separation and subsequently a collection tank (5).

In said collection tank (5) a float (7) controls an hydraulic pump (6), pumping the liquid through a filter clarifier (8). The clarified emollient product is then collected in a storage tank (9). A float (10) driving a dispenser (13) controls the level of the liquid contained in this latter tank.

On the base of the input received from a float (16), said dispenser (13) replenishes said storage tank (9) with an aqueous solution obtained taking the pure chemical product from a dedicated storage tank (11), and water, coming from a well and/or from the water network, from a dedicated collection tank (14).

The partially new and partially recycled emollient product, contained in said storage tank (9), is pumped again to the arcs (2) by means of a booster pump (12).

The water contained in said tank (14) is pumped, through a booster pump (15), to various points of the system, such as an high pressure arc (20) using only water for the rinsing of the emollient product, the rinsing arcs of the vertical and the horizontal brushes, the waxing arc and the volumetric dispenser (13).

Beneath the second part of the tunnel there is a collection tank (17) for the rinsing wastewater which will be drained through the piping (18) following known methods.

### Detailed description of an embodiment of the invention

The emollient product is composed by an aqueous solution of a concentrated chemical product, being this last usually basic. In a preferred embodiment of this invention, after being used for the washing, the exhausted emollient product is collected in a first sedimentation tank (3), to be then conveyed in a second tank (4) for further sedimentation and oil separation and finally in a further tank (5).

Through a lift pump (6) the exhausted emollient product treated in the described way is pumped inside a filter clarifier (8) to be then stored in a tank (9) where the product results to be already clarified.

The clarified emollient product level in the storage tank (9) is monitored by a float (10) which provides to add the liquid in said tank (9) if missing, also in consideration of the chemical product concentration.

As a matter of fact in said tank (9) the chemical product concentration is restored if needed by the dispenser (13) that adds a mixture of water, taken from a tank (14), and pure chemical product, taken from a storage tank (11). Through a pump (12) the product is circulated again, sent to the prewashing arcs (2) and used once again for new washings. Water, that can be supplied through a well and/or through waterworks, replenishes a tank (14) from which it is pumped through a booster pump (15) to the rinsing arcs of the second section of the washing system for vehicles. The water level in the tank (14) is controlled through a float (16).

In particular, water is boosted to a high pressure arc (20) with water only for the rinsing of the emollient product, to the rinsing arcs of the vertical and horizontal brushes, to the waxing arc and to the volumetric dispenser (13).

Rinsing wastewater is conveyed in a tank (17) at first, to be afterwards drained following known methods.

The clarified product, not losing its chemical characteristics, is continuously reused, replenishing, if needed, the product that will remain fixed onto the vehicle surface.

The recycling of the emollient product is made possible by a proper space (19) used to drip it, placed between said pre-washing arcs (2) and said high pressure arc (20) with water only for rinsing the emollient product.

## Claims

1. Washing system for vehicles with a first part of high pressure emollient treatment using an aqueous solution of basic chemical product, that is sprayed onto vehicles by means of one or more arcs (2) each of which having a plurality of nozzles, and a second part of brushing and rinsing, **characterized in that** it comprises a space (19) used to drip the emollient product, placed between said one or more arcs (2) and an arc (20) for rinsing the emollient product from the vehicle.

2. Washing system for vehicles according to the previous claim **characterized in that** in said aqueous solution the mass concentration of said basic chemical product is higher than 3%.

3. Washing system for vehicles according to the previous claim **characterized in that** in said aqueous solution the mass concentration of said basic chemical product ranges between 4% and 6%.

4. Washing system for vehicles according to the previous claim **characterized in that** it comprises means for the collection, treatment, reintegration and reuse of the exhausted emollient solution.

5. Washing system for vehicles according to the previous claim **characterized in that** said means for the collection and treatment of the exhausted emollient solution comprise a tank (3) for collection by sedimentation, a tank (4) for sedimentation and oil separation, a collection tank (5), a filter clarifier (8) and a storage tank (9) for the clarified exhausted emollient.

6. Washing system for vehicles according to the previous claim **characterized in that** said exhausted emollient solution enters first said tank (3) for collection by sedimentation, then said tank (4) for sedimentation and oil separation and, subsequently, said collection tank (5) from which it is pumped into said storage tank (9) through said filter clarifier (8).

7. Washing system for vehicles according to one or more of the previous claims **characterized in that** said storage tank (9) comprises suitable means for the replenishment of the clarified emollient solution.

8. Washing system for vehicles according to one or more of the previous claims **characterized in that** said means for the replenishment of the clarified emollient solution comprise a dispenser (13) that adds a mixture of water, taken from a tank (14), and pure chemical product, taken from a storage tank (11).
